# EUROPEAN PATENT APPLICATION

(11) **EP 1 881 447 A1**
(43) Date of publication of application: **23.01.2008**
(21) Application number: 06117676.4
(22) Date of filing: 21.07.2006
(51) Int. Cl.: G06Q 10/00, G06F 9/44

(54) **Software release management**

(71) Applicant: Microsoft Corporation, Redmond WA 98052 (US)
(72) Inventor: Van Woerkom, Norbert, Dublin 18 (IE); Miller, Angela, Dublin 18 (IE); O'Sullivan, Barry, Dublin 18 (IE); McKeown, Gavin, Dublin 18 (IE); Ryan, Patrick, Dublin 18 (IE); McLain, Richard, Redmond, WA 98052 (US); Gupta, Suraj, Redmond, WA 98052 (US); Lohnes Robert W, Redmond, WA 98052 (US)
(74) Representative: Free, Rachel Alder

(57) **Abstract**

Software release management begins with receipt of a release candidate comprising a software build for a particular target software release. It ends with the step of handing off that software build and associated meta-data to a manufacturing team. No changes to the software build itself are made during this process. Information about builds, targets software releases and stock keeping units (software products) are stored using a hierarchical representation. A sequence of ordered testing and approval steps is stored and may be dynamically re-configured. A release manager automatically manages the testing and approval steps according to the sequence. Web services are used to receive meta-data about the builds and release candidates.

## Description

### TECHNICAL FIELD

This description relates generally to software release management.

### BACKGROUND

The term "software release management" is used herein to refer to a process comprising defining, storing and organising information about proposed software builds. In addition, it comprises a process of receiving a release candidate comprising a software build for a particular target software release to the step of handing off that software build and associated meta-data to a manufacturing team. No changes to the software build itself are made during software release management. That is, software release management is not concerned with making changes to the software code itself. Thus software release management differs from software deployment which is typically thought of as comprising all activities that occur after a piece of software has been developed such as the release and retirement of software by its producer; the installation and removal of software on a user machine and other processes. Software release management also differs from software configuration management which is typically thought of as comprising capturing different versions of a software application and its constituent source files, and includes making records of all changes made during the development process.

An example of a software release might be a version x of a suite of accounting software applications provided for use in the German language by a large corporation which has arranged to receive a non-standard additional accounts reporting application as part of the release. Another example might be a version y of a word processing software application for use by students in the Spanish language with no additional functionality outside the word processing application.

Software release management is a complex problem because of the large number of software components, large numbers of releases, large number of tests that need to be carried out in order to prevent releasing software with viruses or other obvious problems, and need to provide accurate information about the release process to a variety of stakeholders. For example, stakeholders include release teams, manufacturing teams, marketing teams, and development teams who provide final builds. There is a need to speed up the software release management process and to reduce or mitigate any errors that might occur. Errors can potentially cause very expensive recalls of a release. Previously software release management has been carried out manually, for example, by creating discs storing software builds and providing those to manufacturing teams, and by tracking various parts of the process, and meta-data values, manually in disconnected datasources like spreadsheets.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Software release management comprises defining, storing and organising information about proposed software builds. In addition, it comprises a process of receiving a release candidate comprising a software build for a particular target software release and processing that release candidate through to a step of handing off that software build and associated meta-data to a manufacturing team. No changes to the software build itself are made during this process. Information about builds, targets software releases and stock keeping units (software products) are stored using a hierarchical representation. A sequence of ordered testing and approval steps is stored and may be dynamically reconfigured. A release manager automatically manages the testing and approval steps according to the sequence. Web services are used to receive meta-data about the builds and release candidates, and to receive status information from the manufacturing team.

The present example provides a method of software release management comprising:
- receiving a build and associated data for release;
- associating the build with pre-configured information about a stock keeping unit on the basis of at least the associated build data;
- identifying a target associated with the build, the target being a planned software release; and
- carrying out a specified software release management process associated with the target.

This provides the advantage that software releases can be made simply and effectively whilst ensuring that they meet requirements. For example, stock keeping units are defined in advance and one or more of these stock keeping unit definitions are activated. Meta-data associated with the stock keeping units may also be entered and stored. Thus these definitions and meta-data associated with stock keeping units are examples of the pre-configured information about stock keeping units. Planned software releases (targets) are associated with the stock keeping units. Target property meta-data may also be entered as described in more detail below. The specified software release management process may comprise a glidepath and eventual handoff to a manufacturing process.

A corresponding apparatus is provided for software release management comprising:
- a build interface arranged to receive a build and associated data for release;
- means for associating the build with pre-configured information about a stock keeping unit on the basis of at least the associated build data;
- means for identifying a target associated with the build, the target being a planned software release; and
- a release manager arranged to carry out a specified software release management process associated with the target.

Preferably the specified software release management process is stored using a representation of a glidepath comprising a plurality of ordered steps, those steps comprising testing steps and approval steps.

Preferably the method further comprises modifying the representation of the glidepath as a result of user input and modifying the software release management process accordingly. This provides the advantage that different teams of users can modify the process to meet their purpose quickly and simply.

Preferably the method comprises dynamically creating a user interface on the basis of the representation of the glidepath. This provides the advantage that the user interface is always consistent with the glidepath and this reduces errors and provides ease of understanding for users.

Preferably the step of identifying a target comprises accessing a database having a hierarchical representation of the stock keeping unit (with associated property values), comprising a plurality of potential targets associated with that stock keeping unit, each potential target having associated property values. By representing the stock keeping unit data in this way that data is particularly suited for the release management process. Preferably the step of associating the build with a stock keeping unit comprises accessing a database having information about potential stock keeping units and properties associated with each stock keeping unit. For example, all potential stock keeping units are generated and these are dormant until explicitly activated by a user. This helps ensure that no errors in stock keeping unit representations occur.

Preferably the step of carrying out a specified software release management process associated with the target comprises triggering an automated test process to test the build, the triggers being initiated according to the specified software release management process, and receiving results of the automated test process. By accessing test results in this way the method is able to either proceeding with or terminate the software release management process on the basis of the automated test results.

In some examples, the method further comprises monitoring for notification events, and in the case that a notification event occurs, sending one or more messages to pre-specified recipients. For example, email messages detailing test results or other information.

Referring now to the apparatus.
Preferably the apparatus comprises a database storing details of the specified software release management process using a representation of a glidepath comprising a plurality of ordered steps, those steps comprising testing steps and approval steps.

Preferably the apparatus further comprises a user interface arranged to receive input for modifying the software release management process and a processor arranged to modify the representation of the glidepath in the database accordingly.

Preferably the apparatus further comprises means for dynamically forming the user interface on the basis of the representation of the glidepath.

Preferably the database comprises a hierarchical representation of the stock keeping unit comprising a plurality of potential targets associated with that stock keeping unit, each potential target having associated property values.

Preferably the database comprises information about potential stock keeping units and properties associated with each stock keeping unit.

Preferably the release manager is arranged to trigger an automated test process to test the build, the triggers being initiated according to the specified software release management process.

Preferably the release manager is arranged to receive results of the automated test process and to either proceed with or terminate the software release management process on the basis of the automated test results.

Preferably the release manager is arranged to monitor for notification events, and in the case that a notification event occurs, to send one or more messages to pre-specified recipients. The methods described herein may be performed by software in machine readable form on a storage medium. The software can be suitable for execution on a parallel processor or a serial processor such that the method steps may be carried out in any suitable order, or simultaneously.

The invention also encompasses a computer program comprising computer program code means adapted to perform all the steps of any of the methods described above when said program is run on a computer. For example, the computer program is embodied on a computer readable medium.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a release management system;
FIG. 2 is a flow diagram of a method of release management;
FIG. 3 is a flow diagram of a method of release management using web services;
FIG. 4 is a flow diagram of a method of modifying the glidepath of FIG. 2;
FIG. 5 is a schematic diagram of inputs to meta-data associated with a build;
FIG. 6 is a schematic diagram of a data structure in a release management database;
FIG. 7 is a flow diagram of another method of release management.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilised. The description sets forth the functions of the example and the sequence of steps for constructing and operating the example. However, the same or equivalent functions and sequences may be accomplished by different examples.

The term "SKU" is used to refer to a stock keeping unit comprising a piece of software which may be released zero, one or more times during its lifetime for example, as a Beta release, an official release and a follow-up release. Any SKU is specified by a set of parameter values, those parameters being referred to herein as Pillars. Examples of pillars comprise: natural language; media type; platform; activation type; application; and silo. Examples of pillar values are given in the table below:

| | |
|---|---|
| SKU Pillar | Example of Values |
| Language | English, French, German, Arabic, Japanese, ... |
| MediaType | CD, DVD, Self Extracting |
| Platform | x64, x86 |
| ActivationType | Activate, Don't Activate, N/R |
| Application | Wordprocessing, spreadsheet, presentation tool, ... |
| Silo | Client, Server |

The term "Target" is used to refer to a planned release, being a specified release of an SKU. For example, a follow-up release of a spreadsheet application product which was recently released as an official release. Since these are different releases of the same SKU, the pillar values are the same between both Targets (pillars define the SKU, and the SKU is the same). Property values might or might not change. Property values that are known not to change are associated with the SKU and therefore carried between the different Targets. Property values that might change between Targets are therefore associated with the Target (a good example of a Target Property is the Release Date or other milestone dates).

During the release process, a release candidate comprising a build, is associated with a particular SKU and Target.

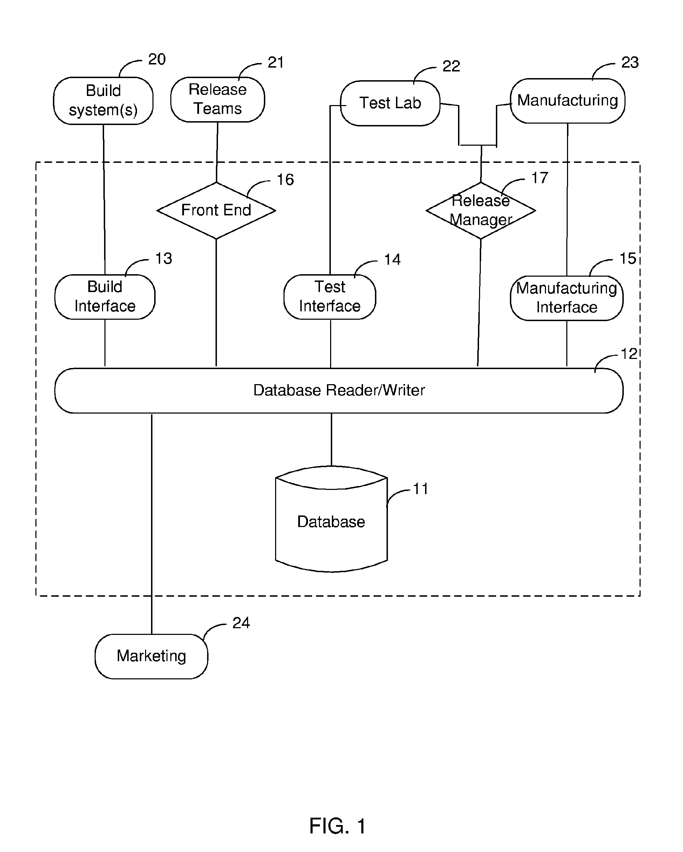

FIG. 1 is a schematic diagram of a release management system 10 comprising a release manager 17, a database 11 and several interfaces including a build interface 13, a test interface 14, a manufacturing interface 15, a front end 16, and a database reader/writer 12. Some or all of the interfaces may be integral or independent of one another and they are provided in any suitable manner, for example, using web services, graphical user interfaces (GUIs) or in any other suitable manner. Information is input to the release management system 10, or output to, one or more of the following external entities or systems as illustrated in FIG. 1: build systems 20, release teams 21, test lab 22, manufacturing team 23, marketing team 24. The function of the interfaces is to enable information to be input to the release management system 10 and/or to enable information to be accessed from the release management system in a consistent manner.

The release management system 10 takes as input a release candidate comprising a software build for a particular target software release and in addition, various meta-data associated with that release candidate. The release management system ensures appropriate testing and approval of the release candidate and provides the resulting release to manufacturing together with appropriate metadata.

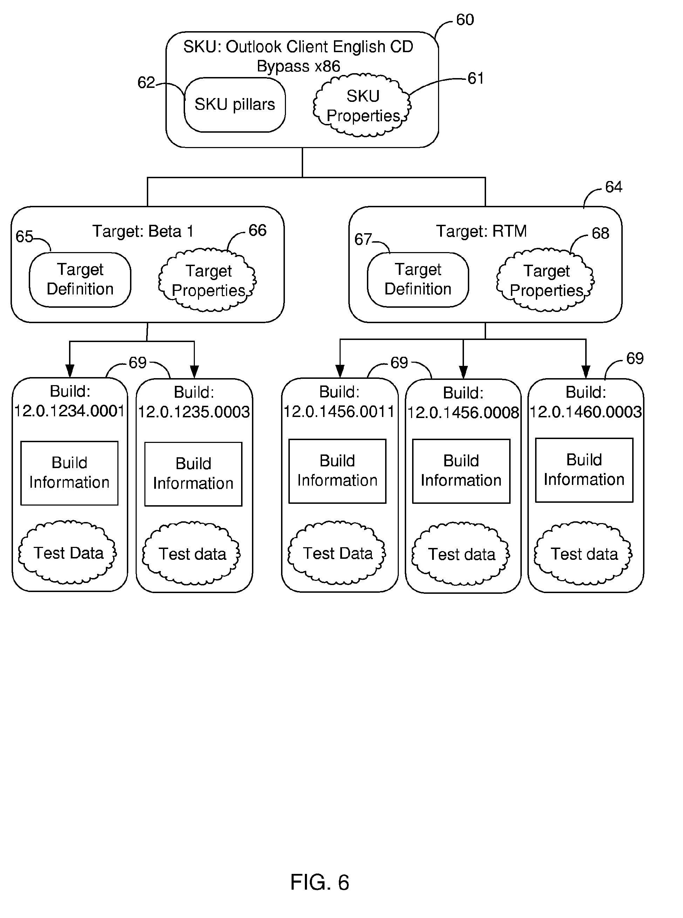

The database 1 1 stores information about release candidates, their progress through a release process and optionally also stores configuration information about the release process. More information about the information stored in the database 11 is given below with reference to FIG. 6.

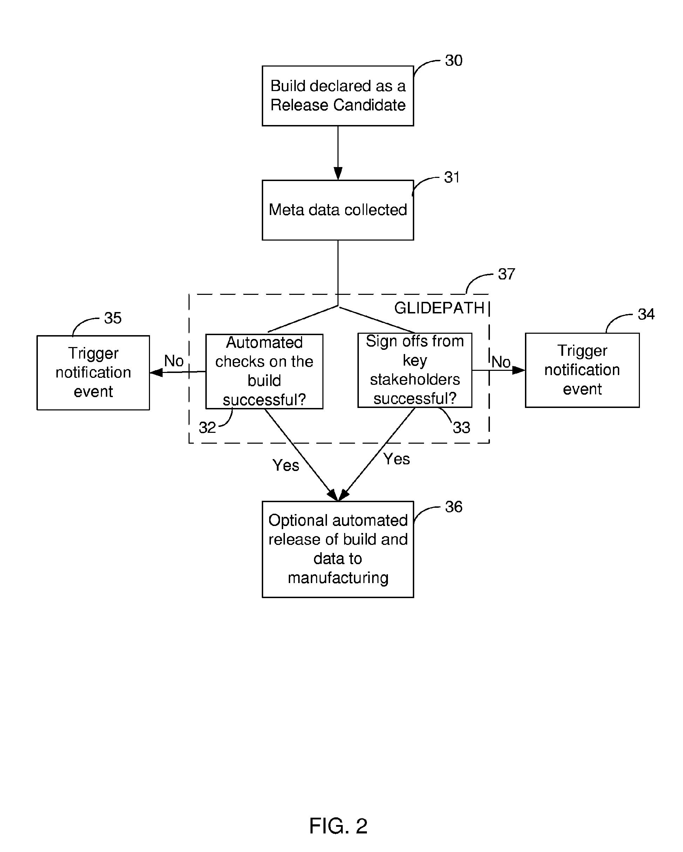

The release manager manages the release process. Configuration information about the release process may be stored at the database 11 and accessed by the release manager or may be stored at the release manager itself. The release manager triggers the stages of the configured release process on the basis of information received from the external systems or entities. This is described in more detail below with reference to FIG. 2.

The front end 16 provides an interface to both the database 1 1 and the release manager 1 7. The front end 16 enables release teams 21 to both view and configure data in the database 1 1 or release manager 17.

FIG. 2 is a flow diagram of at least part of a method of release management using the release manager 10 of FIG. 1. Suppose that a plurality of SKUs have been defined in advance and one or more of these SKU definitions are activated. Meta-data associated with the SKUs is then entered and stored. One or more targets have been associated with one or more of the SKUs and target property meta-data has been entered. Suppose that a build is declared as a release candidate (see box 30). Meta-data associated with the release candidate is collected (see box 31) from the external entities and systems and stored in the database 11. This is an ongoing process of meta-data collection and as such may occur at any suitable point in the release management process. The flow diagram of FIG. 2 is an example only and is not intended to limit the examples to a particular order of steps. A process referred to as a glidepath is initiated (see 37 in FIG. 2) which comprises automated checks on the build (see box 32) and sign-offs or approvals from key stakeholders (see box 33). Collection of meta-data may also occur during the glidepath. The actual configuration of the glidepath may be dynamically modified as described in more detail below. The glidepath configuration is stored, for example, at the database 11 or any other suitable location. If the glidepath is successfully traversed an automated handoff of the build and associated data can be made to manufacturing (see box 36). This automated release is optional in that it can also be made manually if the glidepath is so configured. If the glide path fails for any reason, for example, if the automated checks fail or a sign-off is not obtained, notification events are triggered (see boxes 34 and 35).

A notification event comprises sending an alert to one or more of the external entities and/or stakeholders in any suitable manner, for example, by email, text message, instant message, etc. Details about what form to make notification events in, the content of notification event messages, and which addresses to send those notification events to are configurable. For example, this information is provided by stakeholders via a web service or other suitable interface and is stored in the database 1 1 as XML or in any other suitable form. In this way, notification event messages can be customized per notification event and per stakeholder team or external entity.

As mentioned above, meta-data associated with the release candidate is collected at various stages from the external entities and systems and stored in the database 11. In one embodiment this information is collected using one or more web services or other interfaces.

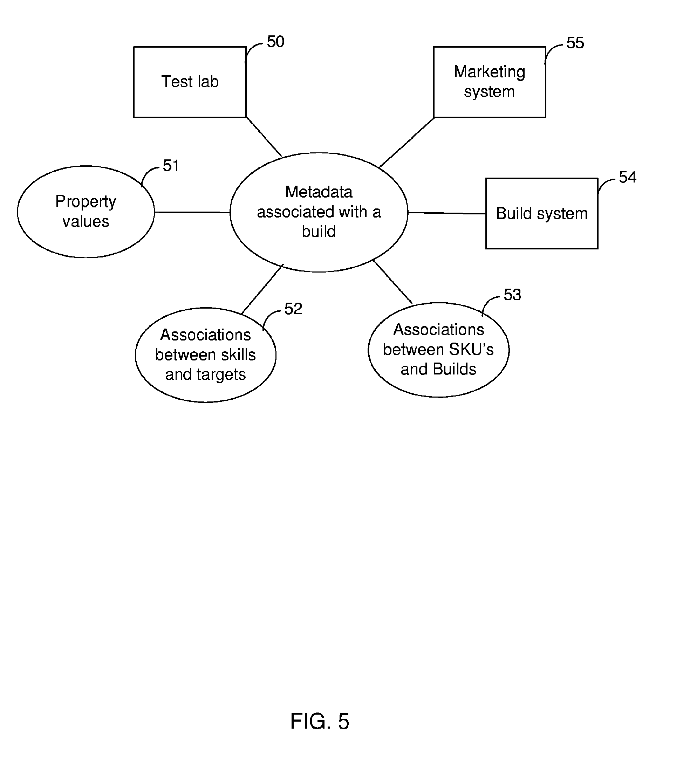

The meta-data comprises one or more of:
- information about tests carried out on a build (see text lab 50 of FIG. 5);
- information from a marketing system (e.g. marketing requirements that must be met, see 55 of FIG. 5);
- information from a build system (e.g. information about the build itself, see 54 of FIG. 5);
- property values (these may be entered via the front end 16 or in any other way as described below, see 51 of FIG. 5);
- associations between SKUs and targets (these may be entered via the front end 16 or in any other way as described below, see 52 of FIG. 5); and
- associations between SKU's and builds (these may be entered via the front end 16 or determined in any other way as described below, see 51 of FIG. 5).

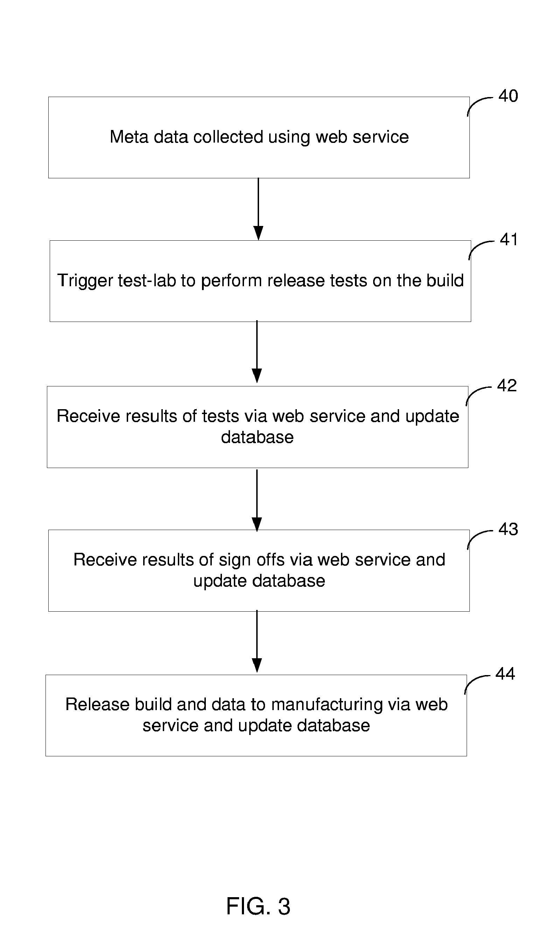

In one example, the meta-data is collected using one or more web services on a continuous basis(see box 40 of FIG. 3). For example, the build interface 1 3 (see FIG. 1), test interface 14, manufacturing interface 15 and front end 16 are provided using one or more web services hosted by the software release management system 10. The use of web services in this way provides modularity between the release management system 10 and any auxiliary system which allows easy extension if needed. For example, if a new release team with its own test and build systems requires to use the release management system 10, it can do so by using the web services.

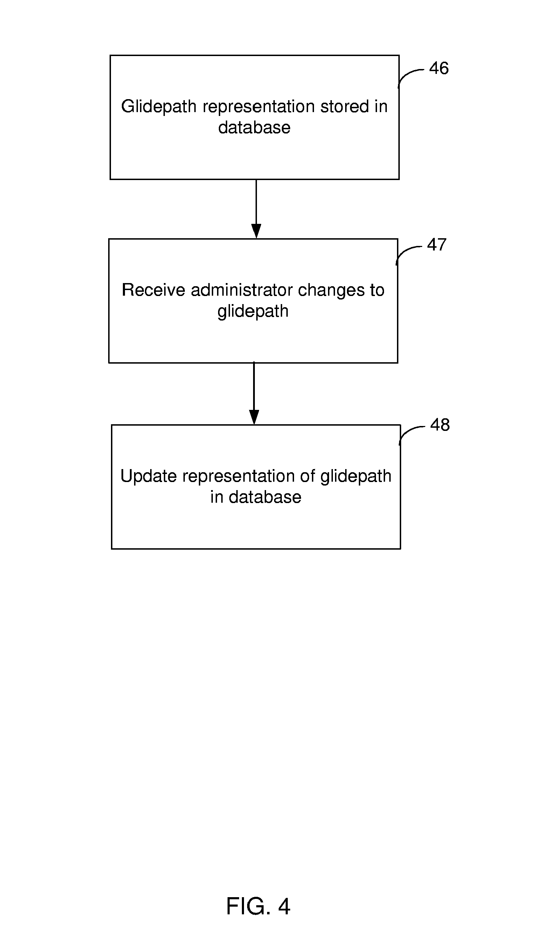

During the glidepath the test-lab is triggered to perform release tests on the build (see box 41 of FIG. 4). This triggering can occur via web services hosted by the test-lab or in any other suitable manner. The results of the tests are received via the web service hosted by the release management system and the database is updated (see 42 of FIG. 4). The results of any sign offs are received via the web service and the database updated (see 43 of FIG. 4). Once the release candidate has passed all tests and received all sign offs, it can be released, together with associated meta-data, to manufacturing (see 44 of FIG. 4), again via the web service provided by the release management system 10. The database 11 is again updated with information about the release to manufacturing.

As mentioned above, a process referred to as a glidepath is initiated (see 37 in FIG. 2) during the release process. This is an ordered set of tasks that encapsulates the release process given a specific SKU. The glidepath comprises automated checks on the build (see box 32) and sign-offs or approvals from key stakeholders (see box 33) as well as the presence or absence of an automated hand-off to manufacturing. The actual configuration of the glidepath may be dynamically modified. The glidepath configuration is stored, for example, at the database 11 or any other suitable location. For example, a particular release team may require three automated checks, followed by two sign-offs, followed by three more automated checks and three more sign-offs. Another release team may require one automated check, followed by one sign-off and then three more automated checks. Thus there is a need to allow the glidepath configuration, to be adjustable. This is achieved by storing a representation of the glidepath at the database or any other suitable location (see box 46 of FIG. 4). The representation is made using XML or any other suitable format. For example, the representation comprises a list of steps, the order of steps and details of a user interface representation of the steps. An operator is able to configure the glidepath representation (see boxes 47 and 48 of FIG. 4) via the front end 16 or in any other suitable way. User interfaces provided by the release management system as well as the release manager 17 are driven off the glidepath representation. These user interfaces comprise the front end 16, any web services interfaces provided by the release management system, and the build interface 13, test interface 14, and manufacturing interface 15. In this way, customization of the release process per release team is possible.

In one example, the glidepath comprises an ordered set of tasks which is the same across all SKUs. Individual tasks within the glidepath may be turned on or off as required using the glidepath representation described above.

Each target release may have one or more associated glidepaths. For example, if a problem is identified with a particular release candidate the glidepath is terminated. The release process is then initiated again for a new release candidate giving another glidepath. Also, if a problem is found in the test process the process may be re-run with a corrected test process. A target becomes closed when its current glidepath state is handed off.

As mentioned above, SKUs are defined using Pillars, each Pillar having one of a large number of possible values. As a result, a large number of possible SKUs exists. In one example, all possible SKUs are defined in the database 11 given the available options for Pillar values. If a new option for a Pillar value is added (for example, adding a new natural language), an SKU generator is preferably, but not essentially, arranged to compute all possible combinations of Pillars for that new option, with each new combination representing a unique SKU. The SKU generator may be integral with the database 1 1 or may be provided using any suitable processor in the release management system 10.
SKU's begin their lifecycle within the release management system 10 by being activated by a user via the front end or other interface. In this way, many of the potential SKU's remain dormant. By computing all possible SKUs in this manner it is possible to ensure that accurate SKU representations are used and activated. This minimizes errors and ensures consistency of data representation.

FIG. 6 is a schematic diagram of an example of a representation of data stored at the database 11. The SKU and Target properties are subject to frequent change during typical use of the release management system. Therefore we use a particular representation of data at the database 1 1 in order to efficiently and simply allow for customization per release team and/or other changes. For example, suppose the downstream manufacturing system 23 requires an extra meta-data value before the system 10 is able to submit a release to it. Our data-representation needs to be able to quickly and efficiently take this change into accou nt.

As illustrated in FIG. 6, in one example, we use a hierarchical representation comprising a tree structure for each SKU. The example in FIG. 6 is for one SKU 60 comprising SKU Pillars 62 and SKU properties 61. As mentioned above, an SKU Pillar may be Language which value might be English. An SKU Property may be the Expected Release Date, which value might be any date. Associated with the SKU are one or more Targets corresponding to target releases such as a Beta release and an official release. The example in FIG. 6 shows two target releases 63, 64 each having target definitions 65, 67 and target properties 66, 68. A target definition comprises an identifier for a beta release (for example) and corresponding target properties. The target inherits the SKU properties 61 of the root SKU 60 and of those only some properties change for this particular target. Those properties are stored in the target properties 66 part of the representation.

One or more builds are formed for a given Target, so that for example, Target 63 of FIG. 6 has two associated builds 69 and Target 64 has three associated builds 69. Build information and test data is stored for each particular build.

The information is stored in the database 11 using XML or in any other suitable format.

As mentioned above, the SKU 61 and Target properties 66 are subject to frequent change. To enable this one or more templates are stored specifying the format for the SKU and Target properties. These property templates are stored at the database 11 or other suitable location and are formed in XML or other suitable format. Operators are able to modify these templates, for example, via the front end 16. In this way, different release teams are able to use SKU and Target properties of types and numbers suited to their particular requirements. User interfaces provided by the release management system as well as the release manager 17 are driven off the SKU and Target properties templates (in addition to the glidepath representation mentioned above). These user interfaces comprise the front end 16, any web services interfaces provided by the release management system, and the build interface 13, test interface 14, and manufacturing interface 15. In this way, customisation of the SKU and Target properties used in the release process is possible (to indicate those properties that are required to be tracked for example). This is advantageous because it allows properties of an SKU and/or Target that are being treated to be easily identified.

Returning to our example mentioned above, suppose the downstream manufacturing system 23 requires an extra meta-data value before the system 10 is able to submit a release to it. For example, suppose the extra meta-data value is a new property being a date. An administrator or other user with appropriate permissions, is able to edit the representation of those properties being tracked.

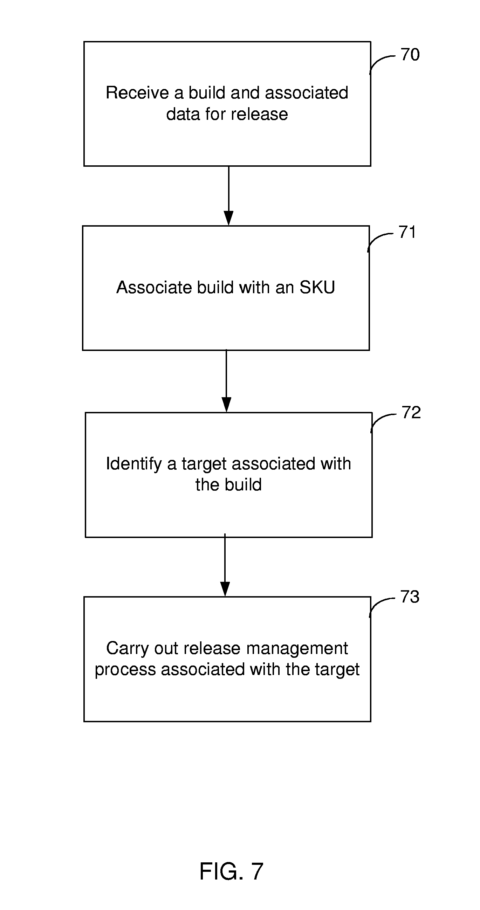

FIG. 7 is a flow diagram of another method of software release management comprising:
- receiving a build and associated data for release (see box 70);
- associating the build with pre-configured information about a SKU on the basis of at least the associated build data (see box 71);
- identifying a target associated with the build, the target being a planned software release (see box 72); and
- carrying out a specified software release management process associated with the target (see box 73).

As for FIG. 2 a plurality of SKUs have been defined in advance and one or more of those SKU definitions activated. Meta-data associated with the SKUs may have been already entered and stored. One or more targets have been associated with one or more of the SKUs and target property meta-data may have been entered/collected.

For example, the release manager can be thought of as having a heartbeat process whereby various items are monitored and acted upon if necessary. When a build is received (see box 70) the heartbeat process makes a check to see if this build is expected by any outstanding targets represented in the database. This is done by matching data associated with the build with that stored in the database for the outstanding targets. As a result, pre-configured information about the SKU associated with the target is quickly and easily obtained using the data representation in the database. In this way, properties that need to be tracked for the particular target are identified, from the data representation. The glidepath is initiated and processes with the particular properties being tracked.

The heartbeat also monitors for test results from the test labs. If these are a pass, the next step in the glidepath is initiated. Otherwise, a notification event is triggered and/or various other actions are taken. For example, the glidepath is aborted or the text is re-triggered.

It is also possible for the glidepath to comprise pre-specified checkpoints. At these checkpoints certain values of SKU and/or target properties must be present as specified at the release manager or database. The heartbeat process is responsible for checking this and holding up a glidepath and/or triggering notification events as appropriate.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices

Any range or device value given herein may be extended or altered without losing the effect sought, as will be apparent to the skilled person.

The steps of the methods described herein may be carried out in any suitable order, or simultaneously where appropriate.

## Claims

1. A method of software release management comprising:
(i) receiving a build and associated data for release;
(ii) associating the build with pre-configured information about a stock keeping unit on the basis of at least the associated build data;
(iii) identifying a target associated with the build, the target being a planned software release; and
(iv) carrying out a specified software release management process associated with the target.

2. A method as claimed in claim 1 wherein the specified software release management process is stored using a representation of a glidepath comprising a plurality of ordered steps, those steps comprising testing steps and approval steps.

3. A method as claimed in claim 2 which further comprises modifying the representation of the glidepath as a result of user input and modifying the software release management process accordingly.

4. A method as claimed in claim 3 which further comprises dynamically creating a user interface on the basis of the representation of the glidepath.

5. A method as claimed in any preceding claim wherein the step of identifying a target comprises accessing a database having a hierarchical representation of the stock keeping unit comprising property values and also comprising a plurality of potential targets associated with that stock keeping unit, each potential target having associated property values.

6. A method as claimed in any preceding claim wherein the step of associating the build with a stock keeping unit comprises accessing a database having information about potential stock keeping units and properties associated with each stock keeping unit.

7. A method as claimed in any preceding claim wherein the step of carrying out a specified software release management process associated with the target comprises triggering an automated test process to test the build, the triggers being initiated according to the specified software release management process, and receiving results of the automated test process.

8. A method as claimed in claim 7 which further comprises either proceeding with or terminating the software release management process on the basis of the automated test results.

9. A method as claimed in any preceding claim which further comprises monitoring for notification events, and in the case that a notification event occurs, sending one or more messages to pre-specified recipients.

10. A computer program comprising computer program code means adapted to perform all the steps of any of the preceding claims when said program is run on a computer.

11. A computer program as claimed in claim 10 embodied on a computer readable medium.

12. An apparatus (10) for software release management comprising:
(i) a build interface (13) arranged to receive a build and associated data for release;
(ii) means for associating the build with pre-configured information about a stock keeping unit on the basis of at least the associated build data;
(iii) means for identifying a target associated with the build, the target being a planned software release; and
(iv) a release manager (1 7) arranged to carry out a specified software release management process associated with the target.

13. An apparatus as claimed in claim 12 comprising a database storing details of the specified software release management process using a representation of a glidepath comprising a plurality of ordered steps, those steps comprising testing steps and approval steps.

14. An apparatus as claimed in claim 13 which further comprises a user interface (16) arranged to receive input for modifying the software release management process and a processor arranged to modify the representation of the glidepath in the database accordingly.

15. An apparatus as claimed in claim 13 or claim 14 which further comprises means for dynamically forming the a user interface (16) on the basis of the representation of the glidepath.

16. An apparatus as claimed in any of claims 13 to 15 wherein the database comprises a hierarchical representation of the stock keeping unit comprising a plurality of potential targets associated with that stock keeping unit, each potential target having associated property values.

17. An apparatus as claimed in any of claims 13 to 16 wherein the database comprises information about potential stock keeping units and properties associated with each stock keeping unit.

18. An apparatus as claimed in any of claims 12 to 17 wherein the release manager is arranged to trigger an automated test process to test the build, the triggers being initiated according to the specified software release management process.

19. An apparatus as claimed in claim 18 wherein the release manager is arranged to receive results of the automated test process and to either proceed with or terminate the software release management process on the basis of the automated test results.

20. An apparatus as claimed in any of claims 12 to 19 wherein the release manager (1 7) is arranged to monitor for notification events, and in the case that a notification event occurs, to send one or more messages to pre-specified recipients.
